# EUROPEAN PATENT SPECIFICATION

(11) **EP 2 337 401 B1**
(45) Date of publication and mention of the grant of the patent: **30.07.2014**
(21) Application number: 10195047.5
(22) Date of filing: 15.12.2010
(51) Int. Cl.: H04B 7/02, H04W 72/04, H04W 72/12

(54) **Apparatus for selecting data transmission base station**
Vorrichtung zur Auswahl einer Datenübertragungsbasisstation
Appareil de sélection de station de base de transmission de données

(30) Priority: 15.12.2009 KR 20090124387
(43) Date of publication of application: 22.06.2011
(73) Proprietor: Electronics and Telecommunications Research Institute, Daejeon 305-700 (KR)
(72) Inventor: Lim, Soon Yong, 305-755, Daejeon (KR); Yang, Mi Jeong, 305-720, Daejeon (KR); Park, Aesoon, 305-755, Daejeon (KR); Jung, Kwang Ryul, 305-721, Daejeon (KR); Shin, Jae Wook, 305-773, Daejeon (KR); Cheon, Kyung-Yul, 305-721, Daejeon (KR)
(74) Representative: Betten & Resch

(56) References cited:
- EP-A2- 1 347 614
- US-A1- 2007 155 377

## Description

### BACKGROUND

### 1. Field of the Invention

Embodiments of the present invention relate to a cooperative transmission scheme or a dynamic base station selection scheme.

### 2. Description of the Related Art

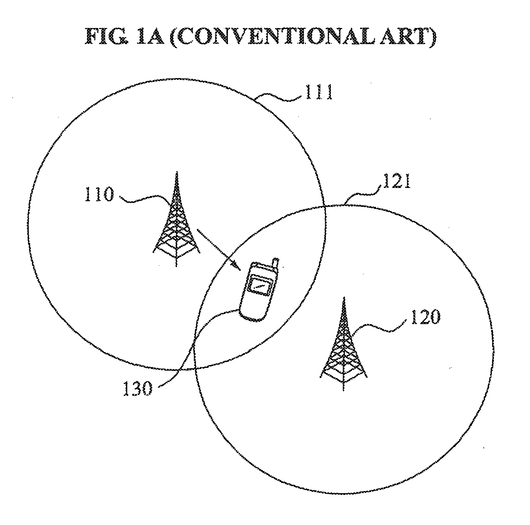

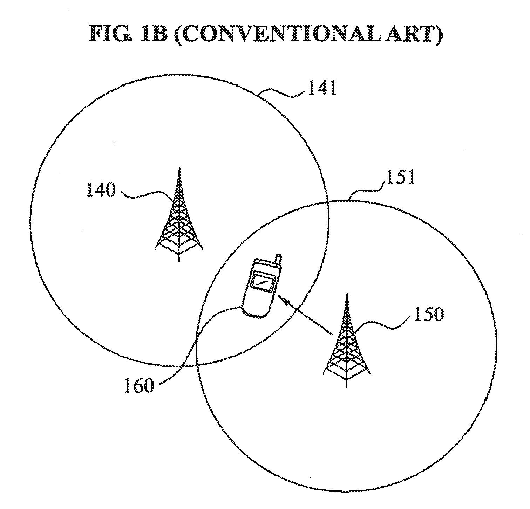

FIGS. 1A and 1B illustrate examples of a terminal to receive data using a conventional handover scheme.

In FIG. 1A, a terminal 130 may receive a signal from a first base station 110 and a second base station 120. Here, the terminal 130 may be located in an area where a coverage 111 of the first base station 110 overlaps a coverage 121 of the second base station 120.

A mobile communication system may include the first base station 110 and the second base station 120. The first base station 110 and the second base station 120 may respectively provide a communication service to transmit signals to the terminal 130 or to receive signals from the terminal 130.

Since the first base station 110 is spaced relatively far away from the terminal 130, a signal transmitted from the first base station 110 to the terminal 130 may undergo strong attenuation. Accordingly, an intensity of the signal may be reduced, and a speech quality of the terminal 130 may be degraded.

The coverage 111 of the first base station 110 may partially overlap the coverage 121 of the second base station 120. Accordingly, the terminal 130 may receive a signal from the first base station 110 and the second base station 120.

In FIG. 1B, a terminal 160 may perform a handover from a first base station 140 to a second base station 150, and may receive a signal from the second base station 150,

When the signal received from the second base station 150 is superior in quality than a signal received from the first base station 140, the terminal 160 may perform a handover to the second base station 150 that neighbors the first base station 140.

The background art is described in particular by the 3GPP draft R1-093912 "Downlink CoMP feedback framework".

### SUMMARY

An aspect of the present invention is to select a base station for transmitting data to a terminal from among a plurality of base stations, using a cooperative transmission scheme or a dynamic base station selection scheme,

Another aspect of the present invention is to determine whether a cooperative transmission scheme or a dynamic base station selection scheme is applied with respect to a specific terminal.

According to an aspect of the present invention, there is provided a serving base station including a transmitter to transmit data scheduling information for a terminal to a cooperative base station, the terminal being located in a coverage of the serving base station, and the cooperative base station neighboring the service base station; a receiver to receive first data transmission amount information from the cooperative base station, the first data transmission amount information being calculated based on the data scheduling information; and a controller to select either the serving base station or the cooperative base station as a data transmission base station for the terminal based on the first data transmission amount information.

According to another aspect of the present invention, there is provided a cooperative base station including a receiver to receive data scheduling information for a terminal from a serving base station, the terminal being located in a coverage of the serving base station; a data transmission amount calculator to calculate data transmission amount information for the terminal based on the data scheduling information; a transmitter to transmit the calculated data transmission amount information to the serving base station, wherein the transmitter transmits first data to the terminal based on the data transmission amount information.

According to still another aspect of the present invention, there is provided a base station control apparatus including a receiver to receive data transmission information of a first base station for a terminal, and data transmission information of a second base station for the terminal; and a data transmission base station selector to select either the first base station or the second base station as a data transmission base station for the terminal, based on the data transmission information of the first base station and the data transmission information of the second base station.

### EFFECT

According to embodiments of the present invention, it is possible to select a base station for transmitting data to a terminal from among a plurality of base stations, using a cooperative transmission scheme or a dynamic base station selection scheme.

Additionally, according to embodiments of the present invention, it is possible to determine whether a cooperative transmission scheme or a dynamic base station selection scheme is applied with respect to a specific terminal.

### BRIEF DESCRIPTION OF THE DRAWINGS

These and/or other aspects, features, and advantages of the invention will become apparent and more readily appreciated from the following description of exemplary embodiments, taken in conjunction with the accompanying drawings of which:
FIGS. 1A and 1B are diagrams illustrating examples of a terminal to receive data using a conventional handover scheme;
FIGS. 2A and 2B are diagrams illustrating examples of a terminal to receive data using a cooperative transmission scheme or a dynamic base station selection scheme according to an embodiment of the present invention;
FIG 3 is a flowchart illustrating a scheme of selecting an optimal base station to transmit data according to an embodiment of the present invention;
FIGS. 4A and 4B are diagrams illustrating a scheme of transmitting data to a terminal using a base station selected by the scheme of FIG. 3;
FIG. 5 is a block diagram illustrating a configuration of a serving base station according to an embodiment of the present invention;
FIG. 6 is a block diagram illustrating a configuration of a cooperative base station according to an embodiment of the present invention; and
FIG. 7 is a block diagram illustrating a configuration of a base station control apparatus according to an embodiment of the present invention.

### DETAILED DESCRIPTION

Reference will now be made in detail to exemplary embodiments of the present invention, examples of which are illustrated in the accompanying drawings, wherein like reference numerals refer to the like elements throughout. Exemplary embodiments are described below to explain the present invention by referring to the figures.

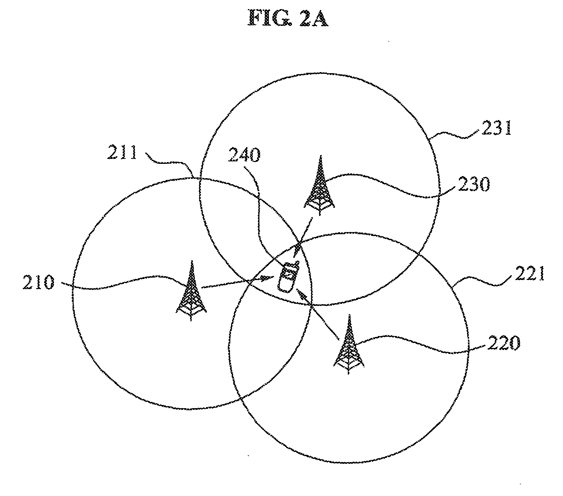

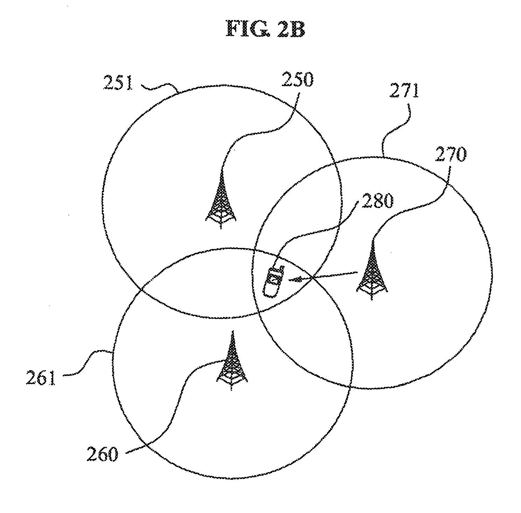

FIGS. 2A and 2B are diagrams illustrating examples of a terminal to receive data using a cooperative transmission scheme or a dynamic base station selection scheme according to an embodiment of the present invention.

FIG 2A illustrates a terminal 240 to receive data using the cooperative transmission scheme.

The terminal 240 may receive all signals from a plurality of base stations 210, 220, and 230. In other words, the terminal 240 may be located in an area where coverages 211, 221, and 231 of the base stations 210, 220, and 230 overlap each other.

In the cooperative transmission scheme, the terminal 240 may receive data from all of the base stations 210, 220, and 230 that transmit signals. Alternatively, the terminal 240 may receive data from at least one base station where a channel state is equal to or greater than a predetermined threshold value, among the base stations 210, 220, and 230.

FIG. 2B illustrates a terminal 280 to receive data using the dynamic base station selection scheme.

The terminal 280 may be located in an area where coverages 251, 261, and 271 of base stations 250, 260, and 270 overlap each other. The terminal 280 may receive data from an optimal base station selected from among the base stations 250, 260, and 270. Here, the optimal base station may be selected based on each channel state between the terminal 280 and each of the base stations 250, 260, and 270, or an amount of data that is to be transmitted to the terminal 280 by each of the base stations 250, 260, and 270.

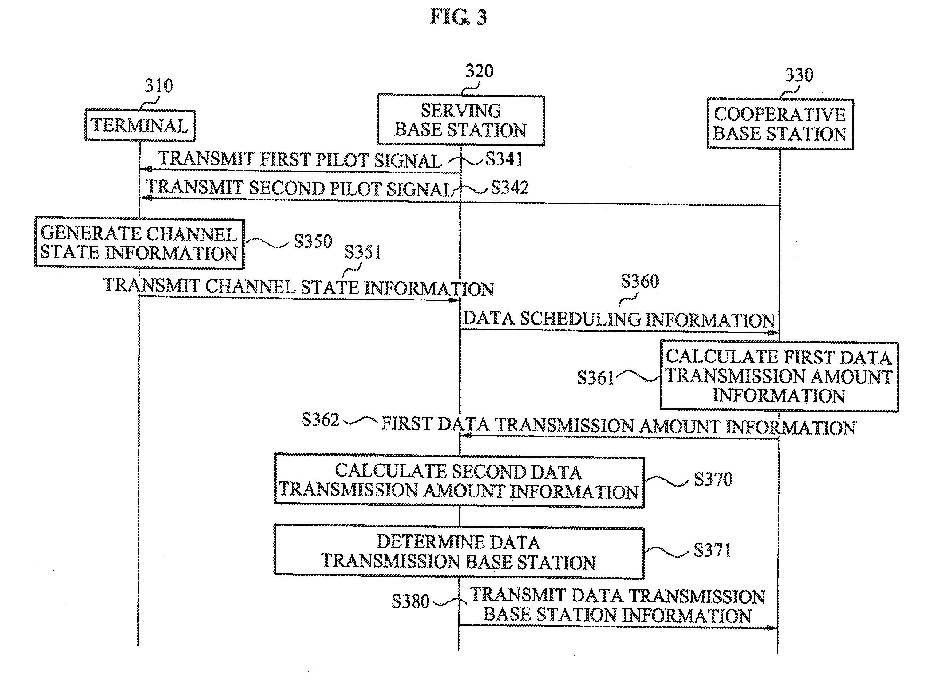

FIG. 3 is a flowchart illustrating a scheme of selecting an optimal base station to transmit data according to an embodiment of the present invention.

In operation S341, a serving base station 320 may transmit a first pilot signal to a terminal 310. Here, the terminal 310 may be connected to the serving base station 320.

In operation S342, a cooperative base station 330 may transmit a second pilot signal to the terminal 310, Here, the cooperative base station 330 may be located adjacent to the serving base station 320, and the terminal 310 may be located in an area where a coverage of the serving base station 320 overlaps a coverage of the cooperative base station 330.

In operation S350, the terminal 310 may estimate states of channels for each base station based on the received pilot signals, and may generate channel state information, Hereinafter, a channel between the terminal 310 and the cooperative base station 330 is referred to as a first wireless channel, and a channel between the terminal 310 and the serving base station 320 is referred to as a second wireless channel. The terminal 310 may estimate both a state of the first wireless channel and a state of the second wireless channel, and may generate information regarding the state of the first wireless channel, and information regarding the state of the second wireless channel.

In operation S3 51, the terminal 310 may transmit the channel state information to the serving base station 320.

In operation S360, the serving base station 320 may transmit data scheduling information to the cooperative base station 330, The data scheduling information may include the information regarding the state of the first wireless channel and the information regarding the state of the second wireless channel. Additionally, the data scheduling information may further include information regarding a state of a downlink buffer of the serving base station 320. The information regarding the state of the downlink buffer may include information regarding an amount and a type of data stored in the downlink buffer.

In operation S361, the cooperative base station 330 may calculate first data transmission amount information based on the data scheduling information. The first data transmission amount information may be defined as information regarding an amount of data that the cooperative base station 330 is able to transmit to the terminal 310 for a predetermined time.

The cooperative base station 330 may allocate wireless resources to the terminal 310 based on the state of the first wireless channel, and may calculate a data transmission amount for each of the allocated wireless resources, and may virtually calculate the first data transmission amount information.

When the state of the first wireless channel is poor, the cooperative base station 330 may not allocate a great amount of wireless resources, to transmit data to the terminal 310, In other words, the cooperative base station 330 may allocate only a small amount of wireless resources to the terminal 310, and may transmit only a small amount of data to the terminal 310 using the allocated wireless resources.

When the state of the first wireless channel is good, the cooperative base station 330 may allocate a great amount of wireless resources to the terminal 310, and may transmit a great amount of data to the terminal 310 using each of the allocated wireless resources.

In operation S362, the cooperative base station 330 may transmit the first data transmission amount information to the serving base station 320.

In operation S370, the serving base station 320 may calculate second data transmission amount information, based on the state of the second wireless channel. The second data transmission amount information may be defined as information regarding an amount of data that the serving base station 320 is able to transmit to the terminal 310 for a predetermined time.

In operation S371, the serving base station 320 may determine a data transmission base station for the terminal 310, based on the first data transmission amount information and the second data transmission amount information. According to an embodiment of the present invention, when at least two cooperative base stations 330 exist, the serving base station 320 may select, as the data transmission base station, only a single best base station from among the serving base station 320 and the at least two cooperative base stations 330. In other words, the dynamic base station selection scheme may be used by the serving base station 320.

Alternatively, the serving base station 320 may select, as the data transmission base station, a base station having a greatest data transmission amount from among the serving base station 320 and the at least two corporative base stations 330 neighboring the terminal 310,

According to another embodiment of the present invention, the serving base station 320 may select at least two base stations as data transmission base stations. For example, the serving base station 320 may select, as data transmission base stations, all base stations having a data transmission amount that is equal to or greater than a predetermined threshold value. In other words, the cooperative transmission scheme may be used by the serving base station 320.

In operation S380, the serving base station 320 may transmit data transmission base station information to the cooperative base station 330. The data transmission base station information may include an identifier (ID) of a base station selected as the data transmission base station.

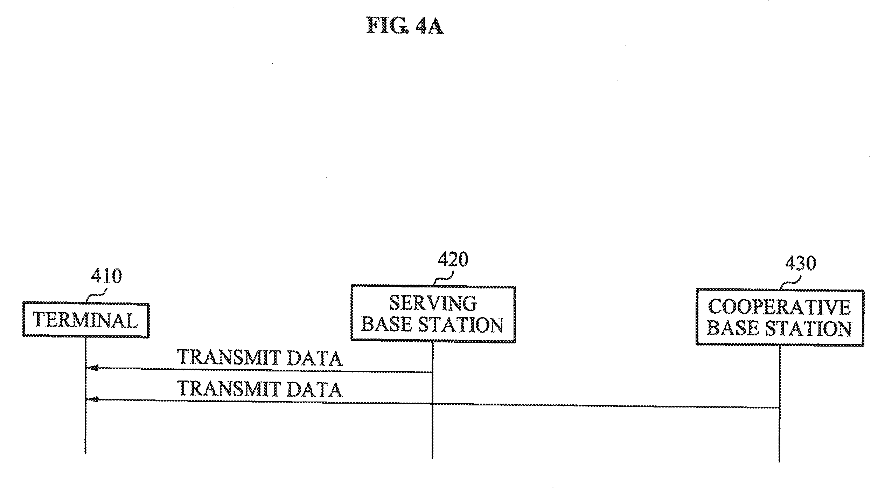

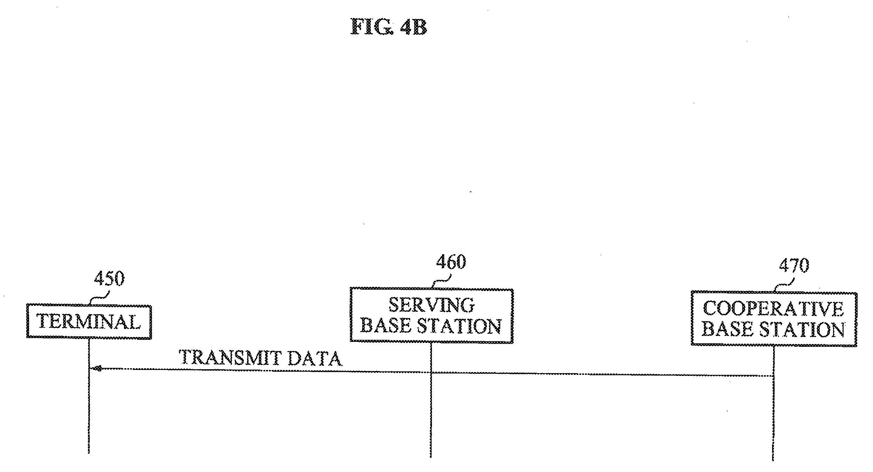

FIGS. 4A and 4B are diagrams illustrating a scheme of transmitting data to a terminal using a base station selected by the scheme of FIG. 3.

FIG. 4A illustrates an embodiment where a serving base station 420 and a cooperative base station 430 transmit data to a terminal 410 using the cooperative transmission scheme.

When the serving base station 420 determines to apply the cooperative transmission scheme with respect to the terminal 410, both of the serving base station 420 and the cooperative base station 430 may be selected to transmit data to the terminal 410.

The selected serving base station 420 may transmit data to the terminal 410, and the selected cooperative base station 430 may transmit data to the terminal 410. Here, the data transmitted by the serving base station 420 may be identical to the data transmitted by the cooperative base station 430. In other words, the terminal 410 may receive the identical data from the serving base station 420 and the cooperative base station 430.

Additionally, the serving base station 420 and the cooperative base station 430 may transmit data to the terminal 410 using the same wireless resource. Specifically, the serving base station 420 and the cooperative base station 430 may transmit data to the terminal 410 using the same frequency band in the same identical time slot.

FIG. 4B illustrates an embodiment where a serving base station 460 or a cooperative base station 470 transmits data to a terminal 450 using the dynamic base station selection scheme.

When the serving base station 420 determines to apply the dynamic base station selection scheme for the terminal 450, only a single base station may be selected as a data transmission base station. While the cooperative base station 470 is selected as the data transmission base station as shown in FIG 4B, the serving base station 460 may be selected as the data transmission base station based on a channel state.

The cooperative base station 470 may transmit data to the terminal 450.

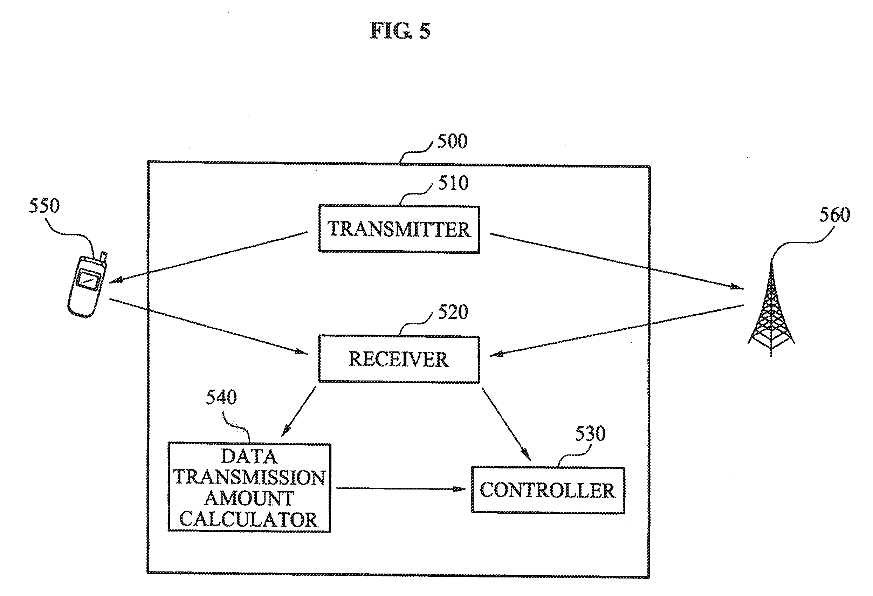

FIG. 5 is a block diagram illustrating a configuration of a serving base station 500 according to an embodiment of the present invention. The serving base station 500 of FIG. 5 includes a transmitter 510, a receiver 520, a controller 530, and a data transmission amount calculator 540.

The transmitter 510 may transmit a first pilot signal to a terminal 550.

The terminal 550 may estimate a state of a wireless channel between the serving base station 500 and the terminal 550 based on the first pilot signal, and may generate information regarding the state of the wireless channel. Hereinafter, the wireless channel between the serving base station 500 and the terminal 550 is referred to as a first wireless channel. In other words, the terminal 550 may generate information regarding a state of the first wireless channel, based on the first pilot signal.

Additionally, the terminal 550 may receive a second pilot signal from a cooperative base station 560. Hereinafter, a wireless channel between the cooperative base station 560 and the terminal 550 is referred to as a second wireless channel. The terminal 550 may estimate a state of the second wireless channel based on the second pilot signal, and may generate information regarding the state of the second wireless channel.

The receiver 520 may receive, from the terminal 550, the information regarding the state of the first wireless channel, or the information regarding the state of the second wireless channel.

The transmitter 510 may transmit data scheduling information for the terminal 550 to the cooperative base station 560. Here, the terminal 550 may be located within a coverage of the serving base station 500, and the cooperative base station 560 may be located adjacent to the serving base station 500. The data scheduling information may include the information regarding the state of the first wireless channel or the information regarding the state of the second wireless channel.

According to another embodiment of the present invention, the data scheduling information may further include information regarding a state of a downlink buffer that is used by the serving base station 500 to transmit data to the terminal 550.

The cooperative base station 560 may generate first data transmission amount information, based on the data scheduling information. The first data transmission amount information may be defined as information regarding an amount of data that the cooperative base station 560 is able to transmit to the terminal 550 for a predetermined time. The cooperative base station 560 may virtually perform data scheduling with respect to the terminal 550 based on the data scheduling information, to generate the first data transmission amount information.

The cooperative base station 560 may allocate wireless resources to the terminal 550 based on the state of the second wireless channel, and may calculate a data transmission amount for each of the allocated wireless resources, and may virtually calculate the first data transmission amount information.

The receiver 520 may receive the first data transmission amount information from the cooperative base station 560.

The data transmission amount calculator 540 may generate second data transmission amount information, based on the data scheduling information. The second data transmission amount information may be defined as information regarding an amount of data that the serving base station 500 is able to transmit to the terminal 550 for a predetermined time. The data transmission amount calculator 540 may generate the second data transmission amount information in a manner similar to the first data transmission amount information generated by the cooperative base station 560.

The controller 530 may select either the serving base station 500 or the cooperative base station 560 as a data transmission base station for the terminal 550, based on the first data transmission amount information. The controller 530 may compare the first data transmission amount information with the second data transmission amount information and may select a base station to transmit data.

According to an embodiment, the controller 530 may select, as the data transmission base station, a base station having a greater data transmission amount between the serving base station 500 and the cooperative base station 560.

According to an embodiment of the present invention, when at least two cooperative base stations 560 exist, the controller 530 may select, as a data transmission base station, only a single best base station from among the serving base station 500 and the at least two corporative base stations 560. For example, the controller 530 may select, as the data transmission base station, a base station having a greatest data transmission amount from among the serving base station 500 and the at least two cooperative base stations 560.

According to another embodiment of the present invention, the controller 530 may select at least two base stations as data transmission base stations. For example, the controller 530 may select, as data transmission base stations, all base stations having a data transmission amount that is equal to or greater than a predetermined threshold value.

When the serving base station 500 is selected as a data transmission base station, the transmitter 510 may transmit data to the terminal 550.

When both of the serving base station 500 and the cooperative base station 560 are selected as data transmission base stations, the cooperative base station 560 may also transmit, to the terminal 550, data that is identical to data of the serving base station 500.

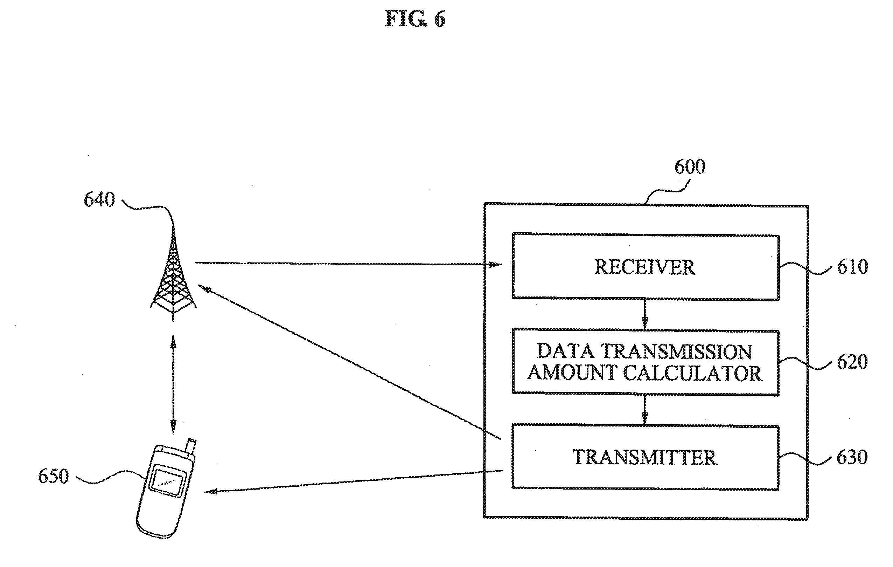

FIG. 6 is a block diagram illustrating a configuration of a cooperative base station 600 according to an embodiment of the present invention. The cooperative base station 600 of FIG. 6 includes a receiver 610, a data transmission amount calculator 620, and a transmitter 630.

The transmitter 630 may transmit a pilot signal to a terminal 650. The terminal 650 may estimate a state of a second wireless channel between the cooperative base station 600 and the terminal 650 based on the pilot signal, and may generate information regarding the state of the second wireless channel. The terminal 650 may transmit the information regarding the state of the second wireless channel to a serving base station 640.

The terminal 650 may receive a pilot signal from the serving base station 640, and may estimate a state of a first wireless channel between the serving base station 640 and the terminal 650. The terminal 650 may generate information regarding the state of the first wireless channel, and may transmit the information regarding the state of the first wireless channel to the serving base station 640.

The receiver 610 may receive data scheduling information for the terminal 650 from the serving base station 640. Here, the terminal 650 may be located within a coverage of the serving base station 640. The data scheduling information may include the information regarding the state of the first wireless channel, and the information regarding the state of the second wireless channel.

According to an embodiment, the data scheduling information may further include information regarding a state of a downlink buffer that is used by the serving base station 640 to transmit data to the terminal 650.

The data transmission amount, calculator 620 may calculate data transmission amount information for the terminal 650 based on the data scheduling information. The data transmission amount information may be defined as information regarding an amount of data that is virtually transmitted by the cooperative base station 600 to the terminal 650 for a predetermined time.

The data transmission amount calculator 620 may allocate at least one wireless resource to the terminal 650 based on the data scheduling information, may calculate a data transmission amount for each of the at least one wireless resource, and may calculate data transmission amount information based on the calculated data transmission amount.

The transmitter 630 may transmit the data transmission amount information to the serving base station 640.

The serving base station 640 may determine a data transmission base station for the terminal 650, based on the data transmission amount information.

According to an embodiment, the serving base station 640 may compare the data transmission amount information received from the transmitter 630 with data transmission amount information stored in the serving base station 640, and may determine the data transmission base station.

When the cooperative base station 600 is selected as the data transmission base station, the receiver 610 may receive a data transmission instruction from the serving base station 640. The transmitter 630 may transmit data to the terminal 650 based on the data transmission instruction.

According to another embodiment, the serving base station 640 and the cooperative base station 600 may be selected as data transmission base stations. Here, the serving base station 640 may additionally transmit data received from the transmitter 630 to the terminal 650,

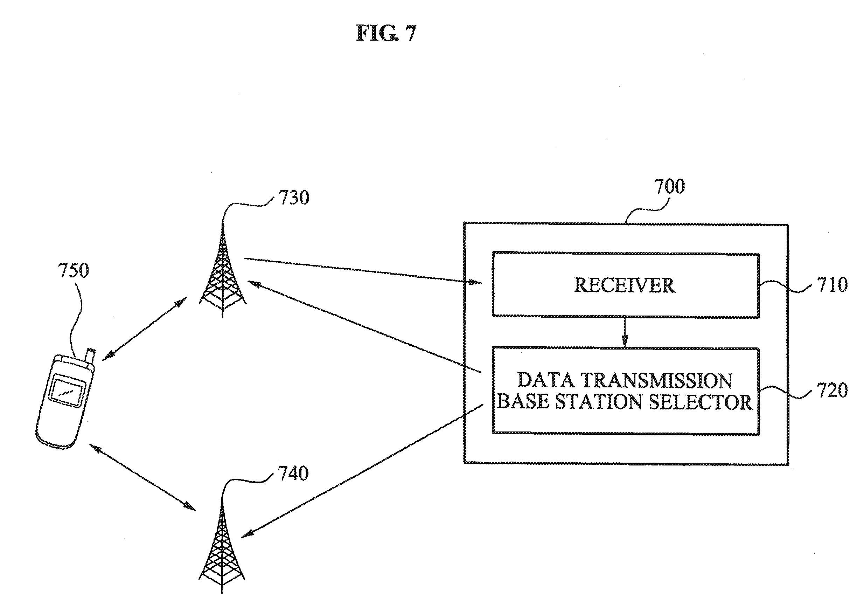

FIG. 7 is a block diagram illustrating a configuration of a base station control apparatus 700 according to an embodiment of the present invention. The base station control apparatus 700 of FIG. 7 includes a receiver 710, and a data transmission base station selector 720,

The embodiments where the serving base station is selected as the data transmission base station have been described above with reference to FIGS. 3 through 6, however, there is no limitation thereto. According to another embodiment of the present invention, a base station control apparatus for controlling each base station may determine a data transmission base station.

The receiver 710 may receive data transmission amount information of a first base station 730 for a terminal 750, and data transmission amount information of a second base station 740 for the terminal 750. The data transmission amount information of the first base station 730 may be calculated based on a state of a wireless channel between the first base station 730 and the terminal 750, and the data transmission amount information of the second base station 740 may be calculated based on a state of a wireless channel between the second base station 740 and the terminal 750.

According to an embodiment, the first base station 730 and the second base station 740 may respectively transmit pilot signals to the terminal 750, and the terminal 750 may generate information regarding each of the states of the wireless channels based on the received pilot signals.

Each of the data transmission amount information may be defined as information regarding an amount of data that is virtually transmitted by each of the first base station 730 and the second base station 740 to the terminal 750 for a predetermined time.

The data transmission base station selector 720 may select, as a data transmission base station for the terminal 750, either the first base station 730 or the second base station 740, based on the data transmission amount information of the first base station 730 and the data transmission amount information of the second base station 740.

The data transmission base station selector 720 may select, as the data transmission base station, a base station having a greater data transmission amount between the first base station 730 and the second base station 740.

According to another embodiment, the data transmission base station selector 720 may select both of the first base station 730 and the second base station 740, as data transmission base stations. Here the first base station 730 and the second base station 740 may transmit identical data to the terminal 750.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is det1ned by the claims and their equivalents.

## Claims

1. A serving base station (500), comprising:
a transmitter (510) adapted to transmit data scheduling information for a terminal (550) to a cooperative base station (560), the terminal (550) being located in a coverage of the serving base station (500), and the cooperative base station (560) neighboring the service base station (500); and
a receiver (520) adapted to receive first data transmission amount information from the cooperative base station (560), the first data transmission amount information being calculated based on the data scheduling information;
**characterized in that** the serving base station comprises:
a data transmission amount calculator (540) adapted to calculate second data transmission amount information for the terminal (550) in the serving base station (500), based on the data scheduling information; and
a controller (530) adapted to compare the first data transmission amount information with the second data transmission amount information, select either the serving base station (500) or the cooperative base station (560) as a data transmission base station for the terminal using a dynamic base station scheme, and select both of the serving base station (500) and the cooperative base station (560) as data transmission base stations for the terminal (550) using a cooperative transmission scheme, based on the first data transmission amount information and the second data transmission amount information,
wherein the serving base station (500) and the cooperative base station (560) are adapted to transmit identical data to the terminal (550) in the cooperative transmission scheme.

2. The serving base station of claim 1, wherein the data scheduling information comprises information regarding a state of a first wireless channel between the terminal (550) and the serving base station. (500), or information regarding a state of a second wireless channel between the terminal (550) and the cooperative base station (560).

3. The serving base station (500) of claim 1 or 2, wherein the first data transmission amount information comprises information regarding an amount of data that is virtually transmitted to the terminal (550) by the cooperative base station (560) for a predetermined time.

4. The serving base station (500) of one of claims 1 to 3, wherein the transmitter (510) is adapted to transmit first data to the terminal (550), when the serving base station (500) is selected as the data transmission base station.

5. The serving base station (500) of one of claims 1 to 4, wherein the controller (530) is adapted to select in the dynamic base station scheme, as the data transmission base station, a base station having a greater data transmission amount between the serving base station (500) and the cooperative base station (560).

6. The serving base station (500) of one of claims 1 to 5, wherein the controller (530) is adapted to select in the cooperative transmission scheme, as the data transmission base stations, base stations having a data transmission amount equal or greater than a predetermined threshold value.

7. A base station control apparatus (700), comprising:
a receiver (710) adapted to receive data transmission information of a first base station (730) for a terminal (750), and data transmission information of a second base station (740) for the terminal (750);
**characterized in that** the base station control apparatus comprises:
a data transmission base station selector (720) adapted to select either the first base station (730) or the second base station (740) as a data transmission base station for the terminal (750) using a dynamic base station scheme, and select both of the first base station (730) and the second base station (740) as data transmission base stations for the terminal (730) using a cooperative transmission scheme, based on the data transmission information of the first base station (730) and the data transmission information of the second base station (740),
wherein the first base station (730) and the second base station (740) are adapted to transmit identical data to the terminal (750) in the cooperative transmission scheme.

8. The base station control apparatus (700) of claim 7, wherein the data transmission information of the first base station (730) is calculated based on a state of a wireless channel between the first base station (730) and the terminal (750), and the data transmission information of the second base station (740) is calculated based on a state of a wireless channel between the second base station (740) and the terminal (750).

9. The base station control apparatus (700) of claim 7 or 8, wherein each of the data transmission information comprises information regarding an amount of data that is virtually transmitted to the terminal (750) by each of the base stations for a predetermined time.

10. The base station control apparatus (700) of claim 7, 8, or 9, wherein the data transmission base station selector (720) selects, as the data transmission base station, a base station having a greater data transmission amount between the first base station (730) and the second base station (740).

## Patentansprüche

1. Bedienende Basisstation (500), umfassend:
einen Sender (510), der dazu ausgelegt ist, Datenplanungsinformation für ein Endgerät (550) an eine kooperative Basisstation (560) zu senden, wobei das Endgerät (550) sich in einem Sendebereich der bedienenden Basisstation (500) befindet und die kooperative Basisstation (560) benachbart zu der bedienenden Basisstation (500) ist; und
einen Empfänger (520), der dazu ausgelegt ist, erste Datenübertragungsmengeninformation von der kooperativen Basisstation (560) zu empfangen, wobei die erste Datenübertragungsmengeninformation basierend auf der Datenplanungsinformation berechnet ist;
**dadurch gekennzeichnet, dass** die bedienende Basisstation umfasst:
einen Datenübertragungsmengenberechner (540), der dazu ausgelegt ist, zweite Datenübertragungsmengeninformation für das Endgerät (550) in der bedienenden Basisstation (500) basierend auf der Datenplanungsinformation zu berechnen; und
eine Steuereinheit (530), die dazu ausgelegt ist, die erste Datenübertragungsmengeninformation mit der zweiten Datenübertragungsmengeninformation zu vergleichen, entweder die bedienende Basisstation (500) oder die kooperative Basisstation (560) als eine Datenübertragungsbasisstation für das Endgerät unter Verwendung eines dynamischen Basisstationsschemas und die bedienende Basisstation (500) und die kooperative Basisstation (560) als Datenübertragungsbasisstationen für das Endgerät (550) unter Verwendung eines kooperativen Übertragungsschemas basierend auf der ersten Datenübertragungsmengeninformation und der zweiten Datenübertragungsmengeninformation auszuwählen,
wobei die bedienende Basisstation (500) und die kooperative Basisstation (560) dazu ausgelegt sind, identische Daten an das Endgerät (550) in dem kooperativen Übertragungsschema zu senden.

2. Bedienende Basisstation nach Anspruch 1, wobei die Datenplanungsinformation Information betreffend einen Zustand eines ersten Drahtloskanals zwischen dem Endgerät (550) und der bedienenden Basisstation (500) oder Information betreffend einen Zustand eines zweiten Drahtloskanals zwischen dem Endgerät (550) und der kooperativen Basisstation (560) umfasst.

3. Bedienende Basisstation (500) nach Anspruch 1 oder 2, wobei die erste Datenübertragungsmengeninformation Information betreffend eine Menge von Daten umfasst, welche für eine vorbestimmte Zeit durch die kooperative Basisstation (560) an das Endgerät (550) virtuell übertragen wird.

4. Bedienende Basisstation (500) nach einem der Ansprüche 1 bis 3, wobei der Sender (510) dazu ausgelegt ist, erste Daten an das Endgerät (550) zu senden, wenn die bedienende Basisstation (500) als die Datenübertragungsbasisstation ausgewählt ist.

5. Bedienende Basisstation (500) nach einem der Ansprüche 1 bis 4, wobei die Steuereinheit (530) dazu ausgelegt ist, in dem dynamischen Basisstationsschema eine Basisstation als die Datenübertragungsbasisstation auszuwählen, welche eine größere Datenübertragungsmenge zwischen der bedienenden Basisstation (500) und der kooperativen Basisstation (560) aufweist.

6. Bedienende Basisstation (500) nach einem der Ansprüche 1 bis 5, wobei die Steuereinheit (530) dazu ausgelegt ist, in dem kooperativen Übertragungsschema Basisstationen als die Datenübertragungsbasisstationen auszuwählen, welche eine Datenübertragungsmenge aufweisen, die gleich oder größer als ein vorbestimmter Schwellwert ist.

7. Basisstationssteuervorrichtung (700), umfassend:
einen Empfänger (710), der dazu ausgelegt ist, Datenübertragungsinformation einer ersten Basisstation (730) für ein Endgerät (750) und Datenübertragungsinformation einer zweiten Basisstation (740) für das Endgerät (750) zu empfangen;
**dadurch gekennzeichnet, dass** die Basisstationssteuervorrichtung umfasst:
einen Datenübertragungsbasisstationsauswähler (720), der dazu ausgelegt ist, entweder die erste Basisstation (730) oder die zweite Basisstation (740) als eine Datenübertragungsbasisstation für das Endgerät (750) unter Verwendung eines dynamischen Basisstationsschemas und die erste Basisstation (730) und die zweite Basisstation (740) als Datenübertragungsbasisstationen für das Endgerät (730) unter Verwendung eines kooperativen Übertragungsschemas basierend auf der Datenübertragungsinformation der ersten Basisstation (730) und der Datenübertragungsinformation der zweiten Basisstation (740) auszuwählen,
wobei die erste Basisstation (730) und die zweite Basisstation (740) dazu ausgelegt sind, in dem kooperativen Übertragungsschema identische Daten an das Endgerät (750) zu senden.

8. Basisstationssteuervorrichtung (700) nach Anspruch 7, wobei die Datenübertragungsinformation der ersten Basisstation (730) basierend auf einem Zustand eines Drahtloskanals zwischen der ersten Basisstation (730) und dem Endgerät (750) berechnet ist, und die Datenübertragungsinformation der zweiten Basisstation (740) basierend auf einem Zustand eines Drahtloskanals zwischen der zweiten Basisstation (740) und dem Endgerät (750) berechnet ist.

9. Basisstationssteuervorrichtung (700) nach Anspruch 7 oder 8, wobei jede Datenübertragungsinformation Information betreffend eine Menge von Daten umfasst, welche für eine vorbestimmte Zeit durch jede der Basisstationen an das Endgerät (750) virtuell gesendet wird.

10. Basisstationssteuervorrichtung (700) nach Anspruch 7, 8 oder 9, wobei der Datenübertragungbasisstationsauswähler (700) als die Datenübertragungsbasisstation eine Basisstation auswählt, welche eine größere Datenübertragungsmenge zwischen der ersten Basisstation (730) und der zweiten Basisstation (740) aufweist.

## Revendications

1. Station de base de desserte (500), comprenant :
un émetteur (510) adapté pour transmettre des informations de planification de données pour un terminal (550) à une station de base coopérative (560), le terminal (550) étant situé dans une zone de couverture de la station de base de desserte (500), et la station de base coopérative (560) étant voisine de la station de base de desserte (500) ; et
un récepteur (520) adapté pour recevoir des premières informations de quantité de transmission de données provenant de la station de base coopérative (560), les premières informations de quantité de transmission de données étant calculées en se basant sur les informations de planification de données ;
**caractérisée en ce que** la station de base de desserte comprend :
un calculateur de quantité de transmission de données (540) adapté pour calculer des deuxièmes informations de quantité de transmission de données pour le terminal (550) dans la station de base de desserte (500), en se basant sur les informations de planification de données ; et
une unité de commande (530) adaptée pour comparer les premières informations de quantité de données de transmission aux deuxièmes informations de quantité de transmission de données, sélectionner soit la station de base de desserte (500) soit la station de base coopérative (560) comme une station de base de transmission de données pour le terminal en utilisant un schéma de station de base dynamique, et sélectionner à la fois la station de base de desserte (500) et la station de base coopérative (560) comme stations de base de transmission de données pour le terminal (550) en utilisant un schéma de transmission coopératif, en se basant sur les premières informations de quantité de transmission de données et les deuxièmes informations de quantité de transmission de données,
dans laquelle la station de base de desserte (500) et la station de base coopérative (560) sont adaptées pour transmettre des données identiques au terminal (550) dans le schéma de transmission coopératif.

2. Station de base de desserte selon la revendication 1, dans laquelle les informations de planification de données comprennent des informations concernant un état d'un premier canal sans fil entre le terminal (550) et la station de base de desserte (500), ou des informations concernant un état d'un deuxième canal sans fil entre le terminal (550) et la station de base coopérative (560).

3. Station de base de desserte selon la revendication 1 ou 2, dans laquelle les premières informations de quantité de transmission de données comprennent des informations concernant une quantité de données qui est virtuellement transmise au terminal (550) par la station de base coopérative (560) pendant une période prédéterminée.

4. Station de base de desserte (500) selon l'une des revendications 1 à 3, dans laquelle l'émetteur (510) est adapté pour transmettre des premières données au terminal (550), lorsque la station de base de desserte (500) est sélectionnée comme la station de base de transmission de données.

5. Station de base de desserte (500) selon l'une des revendications 1 à 4, dans laquelle l'unité de commande (530) est adaptée pour sélectionner dans le schéma de station de base dynamique, comme la station de transmission de données, une station de base ayant une quantité de transmission de données supérieure entre la station de base de desserte (500) et la station de base coopérative (560).

6. Station de base de desserte (500) selon l'une des revendications 1 à 5, dans laquelle l'unité de commande (530) est adaptée pour sélectionner dans le schéma de transmission coopératif, comme stations de base de transmission de données, des stations de base ayant une quantité de transmission de données supérieure ou égale à une valeur seuil prédéterminée.

7. Appareil de commande de station de base (700), comprenant :
un récepteur (710) adapté pour recevoir des informations de transmission de données d'une première station de base (730) pour un terminal (750), et des informations de transmission de données d'une deuxième station de base (740) pour le terminal (750) ;
**caractérisé en ce que** l'appareil de commande de station de base comprend :
un sélecteur de station de base de transmission de données (720) adapté pour sélectionner soit la première station de base (730) soit la deuxième station de base (740) comme une station de base de transmission de données pour le terminal (750) en utilisant un schéma de station de base dynamique, et sélectionner à la fois la première station de base (730) et la deuxième station de base (740) comme stations de base de transmission de données pour le terminal (730) en utilisant un schéma de transmission coopératif, en se basant sur les informations de transmission de données de la première station de base (730) et les informations de transmission de données de la deuxième station de base (740),
dans lequel la première station de base (730) et la deuxième station de base (740) sont adaptées pour transmettre des données identiques au terminal (750) dans le schéma de transmission coopératif.

8. Appareil de commande de station de base (700) selon la revendication 7, dans lequel les informations de transmission de données de la première station de base (730) sont calculées en se basant sur un état d'un canal sans fil entre la première station de base (730) et le terminal (750), et les informations de transmission de données de la deuxième station de base (740) sont calculées en se basant sur un état d'un canal sans fil entre la deuxième station de base (740) et le terminal (750).

9. Appareil de commande de station de base (700) selon la revendication 7 ou 8, dans lequel chacune des informations de transmission de données comprend des informations concernant une quantité de données qui est transmise virtuellement au terminal (750) par chacune des stations de base pendant une période prédéterminée.

10. Appareil de commande de station de base (700) selon la revendication 7, 8 ou 9, dans lequel le sélecteur de station de base de transmission de données (720) sélectionne, comme la station de base de transmission de données, une station de base ayant une quantité de transmission de données supérieure entre la première station de base (730) et la deuxième station de base (740).
